# DEMANDE DE BREVET EUROPEEN

(11) **EP 1 320 171 A1**
(43) Date de publication de la demande: **18.06.2003**
(21) Numéro de dépôt: 02027823.0
(22) Date de dépôt: 12.12.2002
(51) Int. Cl.: H02K 5/22, H02K 5/14

(54) **Dispositif de connexion fixé sur une structure d'un moteur électrique**

(30) Priorité: 17.12.2001 FR 0116334
(71) Demandeur: VALEO CLIMATISATION, 78321 La Verrière (FR)
(72) Inventeur: Quiros, Jose Antonio, 78321 La Verriere (FR)

(57) **Abrégé**

L'invention concerne un dispositif de connexion 1 destiné à raccorder électriquement un groupe moto-ventilateur 2 qui équipe une installation de ventilation, chauffage et/ou climatisation à un faisceau électrique 16 d'un véhicule, ledit groupe moto-ventilateur comprenant un moteur électrique 6 alimenté par un élément de frottement 11 connecté à des conducteurs internes 17 et 18, ledit moteur entraîne au moins une turbine 7 au moyen d'un arbre d'entraînement 8, caractérisé en ce que ledit dispositif de connexion 1 est fixé sur le moteur électrique 6 du coté de ladite turbine 7.

Ledit Dispositif de connexion 1 est fixé de manière amovible sur un élément de structure 10 dudit moteur du coté de l'élément de frottement 11.

Application aux groupes moto-ventilateur pour installation de ventilation, chauffage et/ou climatisation d'un véhicule.

## Description

Le secteur technique de la présente invention est celui des dispositifs de connexion électrique, en particulier ceux servant à relier un groupe moto-ventilateur d'une installation de ventilation, chauffage et/ou climatisation à un faisceau électrique d'un véhicule.

Une installation de ventilation, chauffage et/ou climatisation montée dans un véhicule présente habituellement un boîtier et un groupe moto-ventilateur dont l'objectif est de propulser de l'air extérieur ou recyclé à l'intérieur de l'habitacle. Ce groupe moto-ventilateur est constitué par un moteur électrique qui entraîne une turbine ou hélice au moyen d'un arbre d'entraînement, l'ensemble étant maintenu dans un support. Ce dernier est monté sur le boîtier de manière à positionner la turbine dans un logement particulièrement dédié à celle-ci. Le moteur électrique utilisé dans ce genre d'installation présente un faisceau externe constitué de conducteurs électriques. Ces conducteurs sont reliés par une de leurs extrémités à des balais, porte-balais ou charbons équipant le moteur et par l'autre extrémité à un connecteur dit connecteur volant. La longueur de ces conducteurs est déterminée par l'emplacement du connecteur du faisceau principal du véhicule qui devra alimenter ce moteur. Un des inconvénients de ce type de montage est que le connecteur du faisceau principal est disposé dans l'habitacle, à l'extérieur du support, à une distance plus ou moins importante du moteur. Ainsi, le faisceau externe ne peut être réduit à sa longueur minimum.

Un autre inconvénient dont souffre ce système est que, en traversant le support, le faisceau secondaire doit présenter un système permettant d'assurer une étanchéité entre l'habitacle et l'intérieur du boîtier. Cette étanchéité est alors assurée par un passe-fils en matière élastomère, ce qui créée une pièce supplémentaire. Ces inconvénients sont résolus par la demande de brevet internationale publiée sous le numéro WO 00/48293. Cependant, le dispositif divulgué dans ce document présente d'autres inconvénients que l'objet de l'invention décrite ci-après se propose de résoudre.

Ces désavantages sont les suivants. Dans le document WO 00/48293, un connecteur est fixé de manière indémontable sur le moteur. Ainsi, ce connecteur est moulé d'une seule pièce sur le corps du moteur ou sur l'embase le rendant ainsi totalement indémontable et donc impossible à réutiliser pour d'autre conception de moto-ventilateur. De plus, ce connecteur est du coté opposé à l'axe d'entraînement d'une turbine. Cette localisation à l'opposé de l'axe d'entraînement oblige d'une part à créer des formes particulières difficiles à réaliser et d'autre part nécessite un procédé de montage du moteur par inclinaison dans le support, ce qui complique grandement son industrialisation. De plus, la forme dédiée au passage du connecteur est faite dans le fût du support, c'est-à-dire dans la zone de fixation cylindrique du moteur, ce qui interfère avec les systèmes d'amortissement qui sont installés dans ce même fût.

Le but de la présente invention est donc de résoudre les inconvénients décrits ci-dessus principalement en installant le connecteur dans une zone sans nuisance pour le support et en lui permettant d'être amovible.

L'invention a donc pour objet un dispositif de connexion destiné à raccorder électriquement un groupe moto-ventilateur qui équipe une installation de ventilation, chauffage et/ou climatisation à un faisceau électrique d'un véhicule, ledit groupe moto-ventilateur comprenant un moteur électrique alimenté par un élément de frottement connecté à des conducteurs internes, ledit moteur entraîne au moins une turbine au moyen d'un arbre d'entraînement, caractérisé en ce que ledit dispositif de connexion est fixé sur le moteur électrique du coté de ladite turbine.

Ce dispositif de connexion est fixé de manière amovible sur un élément de structure dudit moteur du coté des éléments de frottement.

Ce même dispositif de connexion comprend un système de fixation apte à coopérer avec l'élément de structure dudit moteur.

Il comprend en outre une paroi de protection de manière à maintenir les conducteurs internes au plus prés du moteur.

Selon une caractéristique de l'invention, la paroi de protection comporte au moins un trou destiné au passage d'au moins un conducteur interne vers l'empreinte de raccordement.

Selon une autre caractéristique de l'invention, la paroi de protection est sécurisée sur le moteur électrique par au moins une agrafe secondaire de fixation.

Selon encore une autre caractéristique de l'invention, le système de fixation comprend au moins une agrafe principale de fixation dont l'extrémité libre est terminée par un ergot qui sécurise la fixation dudit dispositif sur l'élément de structure.

Avantageusement, le groupe moto-ventilateur comprend un support moteur avec lequel le dispositif de connexion assure une étanchéité, celle-ci étant assurée par un joint maintenu entre le support moteur et un épaulement.

Avantageusement encore, le dispositif de connexion comprend une empreinte de raccordement apte à coopérer avec un connecteur du faisceau électrique du véhicule.

Selon une caractéristique de l'invention, l'empreinte de raccordement est de forme complémentaire à la forme du connecteur du faisceau.

Selon une autre caractéristique de l'invention, le dispositif de connexion comprend au moins une paroi interne séparant l'empreinte de raccordement en différents volumes dédiés à chaque conducteur interne.

Enfin, le dispositif de connexion est positionné au droit d'un des balais de contact de l'élément de frottement.

Un tout premier avantage du dispositif selon l'invention réside dans la possibilité de s'affranchir de toutes formes nécessaires au passage du dispositif de connexion dans le fût du support.

Un autre avantage réside dans le fait que les systèmes d'amortissement peuvent être placés indifféremment autour du moteur dans le fût sans que le connecteur selon l'invention n'interfère et ne nuise à ces systèmes.

Un autre avantage non négligeable réside dans la faculté d'interchangeabilité d'un dispositif de connexion selon l'invention. En effet, non seulement il peut être placé n'importe ou sur la circonférence du moteur et avantageusement au plus prés d'un des balais, mais en plus il peut être réutilisé pour un autre type de moteur.

De cette caractéristique découle un autre avantage non négligeable. En effet, la possibilité de déplacer le dispositif objet de l'invention sur toute la circonférence du moteur permet également d'optimiser ou réduire la longueur du faisceau électrique du véhicule en positionnant l'empreinte de raccordement du dispositif au plus près de l'arrivée du faisceau électrique du véhicule.

En outre, ce type de dispositif de connexion est particulièrement adapté pour servir de support à des composants électriques et/ou électroniques, par exemple un condensateur de filtrage.

D'autres caractéristiques, détails et avantages de l'invention ressortiront plus clairement à la lecture de la description donnée ci-après à titre indicatif en relation avec des dessins dans lesquels :
- la figure 1 est une représentation du dispositif selon l'invention en situation sur un moto-ventilateur monté dans son support,
- la figure 2 est une vue plus précise du dispositif de connexion selon l'invention,
- la figure 3 est une vue de coté du dispositif représenté à la figure 2,
- la figure 4 est une vue de dessus du dispositif illustré à la figure 2.

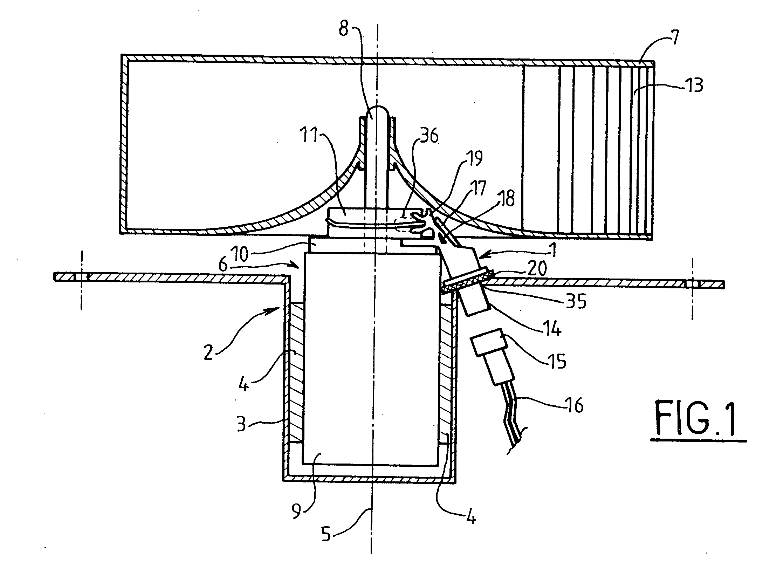

La figure 1 est une représentation du dispositif de connexion 1 conforme à l'invention. Ce dispositif est ici représenté dans son univers de fonctionnement, c'est-à-dire relié à un groupe moto-ventilateur 2 qui équipe une installation de ventilation, chauffage et/ou climatisation d'un véhicule automobile. Ce groupe moto-ventilateur 2 comprend un moteur électrique 6 entraînant une turbine 7 par l'intermédiaire d'un arbre d'entraînement 8, le tout étant monté dans un support moteur 3. De manière accessoire et non obligatoire, l'ensemble moteur-turbine peut être maintenu dans le support moteur 3 au travers de systèmes d'amortissement 4. Ces systèmes d'amortissement 4 sont généralement fais d'un matériau tel que le caoutchouc est disposé en tripode autour d'un axe longitudinal 5 du groupe moto-ventilateur 2 et ce, sensiblement à hauteur du moteur électrique 6 équipant le groupe moto-ventilateur.

Ce moteur électrique 6 comporte un corps 9 présentant à une de ses extrémités un élément de structure 10 et un élément de frottement 11. Ces derniers comprennent principalement les balais de contact 36, des ressorts, etc... et, éventuellement, des composants électriques et/ou électronique de commande. Ce moteur électrique 6 présente par ailleurs un arbre d'entraînement 8 qui débouche à l'extérieur du moteur électrique 6 du côté de la turbine 7. Le groupe moto-ventilateur 2 décrit ici peut aussi présenter un moteur électrique 6 qui entraîne deux turbines 7 disposées à chaque extrémité du moteur électrique 6 (non représenté). Dans ce cas, l'arbre d'entraînement 8 débouche à chaque extrémité du moteur électrique 6 mais seule une des extrémités présente l'élément de structure 10 combiné avec l'élément de frottement 11.

La turbine 7 entraînée par l'arbre d'entraînement 8 est du type radial comprenant un bol intérieur 12 et une pluralité de pâles 13.

Le dispositif de connexion 1 est ici fixé de manière amovible sur l'élément de structure 10 au moyen d'un système de fixation qui coopère par complémentarité de forme avec l'élément de structure 10. Le dispositif de connexion 1 traverse le support moteur 3 de manière à rendre accessible une empreinte de raccordement 14 dudit dispositif au faisceau électrique 16 du véhicule. La forme de l'empreinte de raccordement 14 est, bien entendu, complémentaire d'un connecteur 15 du faisceau 16, c'est-à-dire ovale, rectangulaire ou autres. Une étanchéité est assurée entre le support moteur 3 et le dispositif de connexion 1 au moyen d'un joint 20. Cette étanchéité permet d'assurer une fonction d'étanchéité phonique, thermique, aérolique et/ou vibratoire.

Cette figure illustre aussi le positionnement de conducteurs internes 17 et 18. Ces derniers permettent d'alimenter électriquement les balais de contact de l'élément de frottement 11 nécessaire au fonctionnement du moteur électrique. Ces conducteurs internes 17 et 18 parcourent le tracé suivant : ils sont reliés à des cosses de raccordement (non représentés) disposées à l'intérieur de l'empreinte de raccordement 14 puis débouchent en face supérieure du dispositif de connexion 1 où ils traversent alors une paroi de protection 19 et sont maintenus par cette paroi contre le moteur de manière à proscrire tout risque de frottement entre le bol intérieur 12 de la turbine 7 et les conducteurs internes 17 et 18. Après avoir traversés la paroi de protection 19, les conducteurs internes 17 et 18 rejoignent les balais de contact de l'élément de frottement 11.

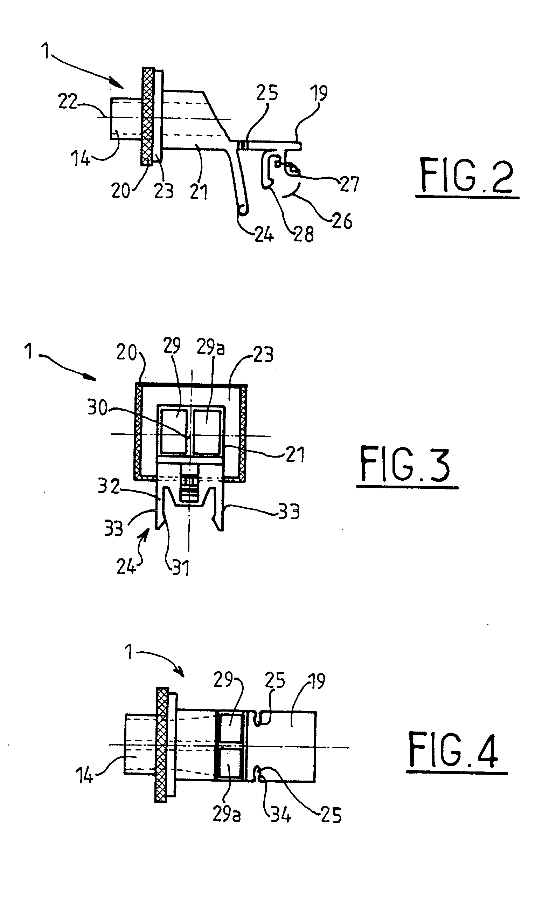

La figure 2 illustre de manière plus précise le dispositif de connexion 1 selon l'invention. Celui-ci présente un bâti principal 21 terminé à une extrémité par l'empreinte de raccordement 14 et à l'autre extrémité par un système de fixation 24 du type à agrafes élastiques ainsi que la paroi de- protection 19. La forme générale du dispositif de connexion 1 présente toutes formes qui laissent passer à l'intérieur dudit dispositif deux conducteurs électriques. La forme du bâti 21 n'est pas nécessairement la même que la forme de l'empreinte de raccordement 14, qui elle par contre, présente une complémentarité de forme avec le connecteur du faisceau électrique du véhicule.

De même, cette figure représente le bâti 21 et l'empreinte de raccordement 14 aligné selon un même axe 22 mais il sera aisément compris que ceux-ci peuvent être positionnés selon deux axes respectifs non parallèles. Du côté de l'empreinte de raccordement 14, le bâti 21 présente un épaulement 23 sur lequel le joint 20 est comprimé lors de l'assemblage du moteur électrique 6 dans le support moteur 3. L'autre extrémité du bâti 21 se termine en biseau de manière à éviter tous contacts avec la turbine. Cette extrémité supporte la paroi de protection 19 et le système de fixation 24. La paroi de protection 19 présente une forme et une orientation par rapport au bâti 21 qui lui permet de venir au plus près de l'élément de frottement 11. Cette paroi de protection 19 comporte en outre au moins un trou 25 qui sera détaillé dans le commentaire de la figure 4 et une agrafe de fixation secondaire 26. Cette agrafe comprend un appui 27 qui vient en contact sur une partie de l'élément de frottement 11 et ceci avantageusement au droit d'un des balais de contact 36. La paroi de protection 19 est verrouillée contre l'élément 11 par un clip élastique de fixation 28. La paroi de protection 19 se trouve ainsi plaquée et sécurisée pour protéger les conducteurs internes 17 et 18 contre les risques de frottement provoqués par la rotation de la turbine.

La figure 3 est une vue de côté du dispositif de connexion 1 en positionnant son regard du côté de la paroi de protection 19. Cette figure illustre le joint 20, l'épaulement 23 et le bâti 21 de forme générale, par exemple, rectangulaire.

A l'intérieur du bâti 21 est formé au moins un volume 29. Ce volume est en fait un conduit creux qui permet à une cosse et à un conducteur interne 17 de traverser le dispositif de connexion 1. Cette figure représente à titre illustratif deux volumes 29 et 29a dédiés à deux conducteurs internes 17 et 18 et séparés l'un de l'autre par une paroi interne 30. L'objet de l'invention n'est bien entendu pas limité à un ou deux volumes et peut donc intégrer autant de volumes que nécessaire à la commande et l'alimentation électrique du moteur 6.

On a représenté plus en détails sur cette figure le système de fixation 24. Cette dernière comprend au moins une agrafe principale de fixation 33 dont l'extrémité libre est terminée par un ergot 31 qui sécurise la fixation dudit dispositif sur l'élément de structure 10. Cet ergot 31 est positionné à l'extrémité libre d'une jambe flexible 32 qui , elle, est raccordée à l'extrémité du bâti 21 sensiblement au même endroit que la paroi de protection 19. Ce système de fixation 24 est avantageusement mais non limitativement constitué de deux agrafes principales de fixation 33 disposées l'une en face de l'autre ou à des endroits susceptibles de permettre aux ergots 31 de chacune des agrafes 33 de coopérer parfaitement avec une partie de l'élément de structure 10 et donc de sécuriser la fixation du dispositif de connexion 1.

La figure 4 est une vue dessus de la représentation de l'invention commentée à la figure 2. Le biseau pratiqué à une extrémité du bâti 21 rend apparent l'entrée des deux volumes 29 et 29a par lesquels pénètrent les conducteurs internes 17 et 18. La représentation en traits interrompus illustre les volumes 29 et 29a qui forment ainsi des conduits traversant l'empreinte de raccordement 14.

Cette figure met en valeur particulièrement la paroi de protection 19 et le trou 25. Dans le cas d'un seul trou, celui-ci autorise le passage d'au moins deux conducteurs internes 17 et 18 côte à côte. Dans le cas de deux trous 25 comme illustré ici, chaque conducteur interne 17 ou 18 est maintenu par ce trou 25 au moyen d'une restriction 34 pratiquée entre le bord de la paroi protection 19 et le trou 25. Le conducteur est alors maintenu dans une position déterminée par les trous 25.

Le fonctionnement et l'installation du dispositif de connexion 1 sur un groupe moto-ventilateur sont les suivants. Avant de solidariser le moteur électrique 6 dans son support 3, on vient positionner le dispositif de connexion 1 en faisant coopérer le système de fixation 24 avec l'élément de structure 10 et en venant sécuriser la paroi de protection 19 au moyen de l'agrafe secondaire de fixation 26. On aura auparavant mis en place les cosses raccordées aux conducteurs internes 17 et 18 dans les volumes 29 et 29a au niveau de l'empreinte de raccordement 14 puis fait pénétrer ces conducteurs internes dans leurs trous respectifs 25. Le moteur électrique 6 équipé ainsi de son dispositif de connexion 1 est alors prêt à être emboîté dans le support de moteur 3 sans manoeuvre particulière. Il suffit simplement de faire correspondre l'empreinte de raccordement 14 avec un ajournement pratiqué dans le support moteur 3 puis amener le connecteur 15 du faisceau électrique 16 du véhicule s'embrocher sur l'empreinte de raccordement 14.

On comprend aussi que le dispositif selon l'invention peut donc être adaptable à tous moteurs électriques ayant un faisceau externe. En effet, il suffit alors de couper ce faisceau, monter des cosses et les intégrer au dispositif de connexion 1 pour monter l'ensemble dans un support moteur adéquat. Ainsi, le même dispositif de connexion 1 peut être utilisé pour différents types de moteur électrique.

## Revendications

1. Dispositif de connexion (1) destiné à raccorder électriquement un groupe moto-ventilateur (2) qui équipe une installation de ventilation, chauffage et/ou climatisation à un faisceau électrique (16) d'un véhicule, ledit groupe moto-ventilateur comprenant un moteur électrique (6) alimenté par un élément de frottement (11) connecté à des conducteurs internes (17, 18), ledit moteur entraîne au moins une turbine (7) au moyen d'un arbre d'entraînement (8), **caractérisé en ce que** ledit dispositif de connexion (1) est fixé sur le moteur électrique (6) du coté de ladite turbine (7).

2. Dispositif de connexion (1) selon la revendication 1, **caractérisé en ce qu'**il est fixé de manière amovible sur un élément de structure (10) dudit moteur du coté de l'élément de frottement (11).

3. Dispositif de connexion (1) selon l'une quelconque des revendications précédentes, **caractérisé en ce qu'**il comprend un système de fixation (24) apte à coopérer avec l'élément de structure (10) dudit moteur.

4. Dispositif de connexion (1) selon l'une quelconque des revendications précédentes, **caractérisé en ce qu'**il comprend une paroi de protection (19) de manière à maintenir les conducteurs internes (17, 18) au plus prés du moteur.

5. Dispositif de connexion (1) selon la revendication 4, **caractérisé en ce que** la paroi de protection (19) comporte au moins un trou (25) destiné au passage d'au moins un conducteur interne (17, 18) vers l'empreinte de raccordement.

6. Dispositif de connexion (1) selon l'une quelconque des revendications 4 à 5, **caractérisé en ce que** la paroi de protection (19) est sécurisée sur le moteur électrique (6) par au moins une agrafe secondaire de fixation (26).

7. Dispositif de connexion (1) selon l'une quelconque des revendications 3 à 6, **caractérisé en ce que** le système de fixation (24) comprend au moins une agrafe principale de fixation (33) dont l'extrémité libre est terminée par un ergot (31) qui sécurise la fixation dudit dispositif sur l'élément de structure (10).

8. Dispositif de connexion (1) selon l'une quelconque des revendications précédentes, **caractérisé en ce que** le groupe moto-ventilateur (2) comprend un support moteur (3) avec lequel le dispositif de connexion (1) assure une étanchéité, celle-ci étant assurée par un joint (20) maintenu entre le support moteur (3) et un épaulement (23).

9. Dispositif de connexion (1) selon l'une quelconque des revendications précédentes, **caractérisé en ce qu'**il comprend une empreinte de raccordement (14) apte à coopérer avec un connecteur (15) du faisceau électrique (16) du véhicule.

10. Dispositif de connexion (1) selon la revendication 9, **caractérisé en ce que** l'empreinte de raccordement (14) est de forme complémentaire à la forme du connecteur (15) du faisceau (16).

11. Dispositif de connexion (1) selon l'une quelconque des revendications 9 à 10, **caractérisé en ce qu'**il comprend au moins une paroi interne (30) séparant l'empreinte de raccordement (14) en différents volumes (29, 29a) dédiés à chaque conducteur interne (17, 18).

12. Dispositif de connexion (1) selon l'une quelconque des revendications précédentes, **caractérisé en ce qu'**il est positionné au droit d'un des balais de contact de l'élément de frottement (11).
